(19) Europäisches Patentamt
European Patent Office
Office européen des brevets

(11) **EP 3 555 412 B1**

(12) **FASCICULE DE BREVET EUROPEEN**

(45) Date de publication et mention
de la délivrance du brevet:
**28.06.2023 Bulletin 2023/26**

(21) Numéro de dépôt: **17821984.6**

(22) Date de dépôt: **13.12.2017**

(51) Classification Internationale des Brevets (IPC):
***E21B 17/042*** *(2006.01)*

(52) Classification Coopérative des Brevets (CPC):
**E21B 17/042**

(86) Numéro de dépôt international:
**PCT/FR2017/053533**

(87) Numéro de publication internationale:
**WO 2018/109371 (21.06.2018 Gazette 2018/25)**

(54) **JOINT FILETÉ POUR COMPOSANT TUBULAIRE**

GEWINDEVERBINDUNG FÜR ROHRFÖRMIGE KOMPONENTE

THREADED JOINT FOR TUBULAR COMPONENT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **16.12.2016 FR 1662669**

(43) Date de publication de la demande:
**23.10.2019 Bulletin 2019/43**

(73) Titulaires:
• **Vallourec Oil and Gas France
59620 Aulnoye-Aymeries (FR)**
• **Nippon Steel Corporation
Tokyo 100-8071 (JP)**

(72) Inventeurs:
• **MENCAGLIA, Xavier
59144 Gommegnies (FR)**
• **DUFRENE, Corey
Houston, Texas 77008 (US)**
• **DOUCHI, Sadao
Tokyo 100-8071 (JP)**
• **SUGINO, Masaaki
Tokyo 100-8071 (JP)**

(74) Mandataire: **Cabinet Netter
36, avenue Hoche
75008 Paris (FR)**

(56) Documents cités:
EP-A1- 2 589 846    WO-A1-02/073076
FR-A1- 2 889 727    FR-A1- 2 913 746
FR-A1- 2 952 993    FR-A1- 2 953 272

• **Vallourec: "VAM Book", , 1 avril 2016
(2016-04-01), XP055388838, Extrait de l'Internet:
URL:http://www.vamservices.com [extrait le
2017-07-07]**

**Description**

L'invention concerne le domaine des joints étanches de composants tubulaires, utilisés notamment pour le forage ou l'exploitation des puits d'hydrocarbures. Lors du forage ou de l'exploitation, les joints sont soumis à des contraintes de compression et de traction importantes et doivent éviter une désolidarisation.

Ces joints sont soumis à des sollicitations de traction ou de compression axiales, de pressions intérieures ou extérieures de fluide, de flexion ou encore de torsion, éventuellement combinées et d'intensité pouvant fluctuer. L'étanchéité doit être assurée malgré les sollicitations et malgré les conditions d'emploi rudes sur chantier. Les joints filetés doivent pouvoir être vissés et dévissés plusieurs fois sans dégradation de leurs performances, notamment par grippage. Après dévissage, les composants tubulaires peuvent être réutilisés dans d'autres conditions de service.

En traction, un phénomène de désengagement (« jump-out » en anglais) peut se produire et se propager d'un filet à l'autre avec un risque de désolidarisation du joint. Ce phénomène est facilité par une pression intérieure élevée.

A cet effet, il est connu la demande FR 2 952 993 divulguant un joint fileté comprenant un premier et un second composant tubulaire. Le premier composant comporte une extrémité mâle comprenant, sur sa surface périphérique extérieure, une surface distale et une zone filetée mâle. Le second composant comporte une extrémité femelle comprenant, sur sa surface périphérique intérieure, une surface distale et une zone filetée femelle. La zone filetée mâle est vissée dans la zone filetée femelle, lesdites zones filetées comportant des filets de largeur croissante depuis leur surface distale respective, les filets comprenant des flancs porteurs présentant des angles négatifs au moins sur une partie de leur dimension radiale, et des flancs d'engagement, tel qu'un jeu radial subsiste à l'état connecté entre des sommets des filets mâles et des fonds des filets femelles et/ou entre des sommets des filets femelles et des fonds des filets mâles. Un jeu axial subsiste également à l'état connecté entre les flancs d'engagement des filets mâle et femelle. Dans une telle connexion, la surface distale de l'extrémité mâle et/ou de l'extrémité femelle est mise en contact de butée axiale contre une surface de butée correspondante. Cette solution permet d'améliorer la résistance à la traction mais sa performance structurelle de résistance aux fortes pressions extérieure et intérieure induit une flexion importante des lèvres d'étanchéité. Il existe un besoin d'amélioration de l'étanchéité lors de sollicitations avec variations entre fortes pressions externes et fortes pressions intérieures.

De plus, il est à noter que l'insertion et le retrait d'accessoires de contrôles ou de forage à l'intérieur d'une colonne formée à partir de tubes selon l'invention précédemment citée présente quelques difficultés lors du passage d'un tube vissé à un autre.

Le document FR2953272 A1 divulgue un joint fileté utilisé dans l'exploration ou l'exploitation des puits d'hydrocarbures, comprenant un premier et un second composants tubulaires, le premier composant comportant une extrémité mâle comprenant une zone filetée disposée sur sa surface périphérique extérieure, le second composant comportant une extrémité femelle comprenant une zone filetée disposée sur sa surface périphérique intérieure, la zone filetée de l'extrémité mâle étant vissée dans la zone filetée de l'extrémité femelle, les zones filetées comportant des filets respectivement mâle et femelle, les filets comprenant une rainure étant ménagée dans le flanc porteur de la zone filetée de l'extrémité femelle et/ou respectivement de l'extrémité mâle, et un bossage étant ménagé en saillie axiale à partir du flanc porteur de la zone filetée de l'extrémité mâle et/ ou respectivement de l'extrémité femelle, le bossage comprenant une surface convexe et une surface concave, le bossage étant logé dans la rainure avec, à l'état connecté, un jeu radial subsistant entre la surface concave et la rainure et un jeu axial subsistant entre l'extrémité du bossage et le fond de la rainure.

La présente invention permet également d'améliorer l'étanchéité d'un joint sous contraintes de flexion par rapport aux solutions de l'art antérieur.

L'invention concerne un joint fileté comprenant un premier et un second composants tubulaires vissés l'un avec l'autre,

le premier composant comportant un premier tube et un élément mâle disposé à une extrémité dudit premier tube, l'élément mâle comportant successivement sur sa surface périphérique extérieure:

- une surface distale mâle
- une lèvre interne mâle comportant un anneau interne d'épaisseur minimale Epi,
- une zone filetée mâle, tel qu'une extrémité interne de cette zone filetée mâle est à une distance axiale non nulle Li de la surface distale mâle,
- un logement externe mâle, et
- un épaulement extérieur pouvant former une surface de butée extérieure mâle,

le second composant comportant un deuxième tube et un élément femelle disposé à une extrémité dudit deuxième tube, l'élément femelle comportant successivement sur sa surface périphérique intérieure:

- un épaulement intérieur
- un logement interne femelle, disposé en regard de la lèvre interne mâle,
- une zone filetée femelle,
- une lèvre externe femelle comportant un anneau externe d'épaisseur minimale Epe, et
- une surface distale femelle pouvant coopérer en réaction de butée avec la surface de butée extérieure mâle, cette surface distale femelle étant située à une distance axiale non nulle Le d'une extrémité externe de la zone filetée femelle,

tel qu'en position vissée du joint, un jeu radial subsiste entre l'anneau interne mâle et le logement interne femelle, un jeu radial subsiste entre l'anneau externe femelle et le logement externe mâle, une étanchéité intérieure étant formée localement entre la lèvre interne mâle et le logement interne femelle,

l'étanchéité intérieure comporte une portée d'étanchéité intérieure mâle apte à venir en contact interférent avec une portée d'étanchéité intérieure femelle correspondante ménagée sur l'élément femelle, la portée d'étanchéité intérieure mâle est torique avec un rayon compris entre 10 et 80 mm ou conique avec un demi-angle de cône compris entre 2° et 15° et telle qu'une épaisseur maximale au droit de cette de cette portée d'étanchéité intérieure mâle est supérieure à l'épaisseur de l'anneau interne,

le joint étant tel que :

$$10\% \leq Epi/Li$$

En particulier, le ratio Epi/Li est affiné en fonction d'un diamètre nominal extérieur du premier tube, ce diamètre nominal extérieur de tube étant mesuré à distance de l'élément mâle, de telle sorte que si ce diamètre nominal extérieur de tube est supérieur à 200 mm, et préférentiellement supérieur à 250 mm, le joint est alors tel que :

$$25\% \leq Epi/Li$$

De même, le joint selon l'invention peut être optimisé pour son étanchéité extérieure, par exemple formée localement entre la lèvre externe femelle et le logement externe mâle, de sorte que le joint est tel que :

$$10\% \leq Epe/Le$$

Préférentiellement, le ratio Epe/Le peut être choisi de sorte qu'il soit supérieur ou égal à 15%, et encore mieux supérieur ou égal à 20%.

Pour une meilleure définition de l'invention, le ratio Epi/Li peut être au maximum égal à 80%, et préférentiellement inférieur ou égal à 60%, ou encore inférieur ou égal à 50%.

De même, le ratio Epe/Le peut être au maximum égal à 80%, et préférentiellement inférieur ou égal à 60%, ou encore inférieur ou égal à 50%.

En particulier, la distance Li entre la zone filetée mâle, particulièrement une extrémité interne d'usinage de cette zone filetée mâle, et la surface distale mâle peut être comprise entre 15 mm et 25 mm. La distance Li représente la longueur axiale de la lèvre interne mâle. De même, la distance Le entre la surface distale femelle et l'extrémité externe d'usinage de la zone filetée femelle peut être comprise entre 15 mm et 25 mm. La distance Le représente la longueur axiale de la lèvre externe femelle. Les mesures axiales sont réalisées le long d'un axe longitudinal de tube. Lorsque le joint est formé, l'axe longitudinal du joint se confond avec les axes longitudinaux des premier et deuxième tubes.

De manière préférentielle, les zones filetées peuvent comporter des filets, respectivement mâles et femelles, de largeur croissante. Les filets peuvent comporter des flancs porteurs présentant des angles négatifs, et des flancs d'engagement présentant un angle positif, un jeu radial subsistant à l'état connecté entre des sommets des filets mâles et des fonds des filets femelles et/ou entre des sommets des filets femelles et des fonds des filets mâles, un jeu axial subsistant également à l'état connecté entre les flancs d'engagement des filets mâle et femelle.

De manière préférentielle, la surface de butée extérieure mâle peut présenter un angle α par rapport à une perpendiculaire à l'axe longitudinal du joint, de manière à créer un angle aigu entre la surface de butée extérieure mâle et la deuxième surface mâle. En complémentarité, la surface distale femelle peut présenter un même angle α. L'angle α peut être compris entre 5° et 45°.

Préférentiellement, les flancs porteurs peuvent présenter un angle compris entre -1° et -15°.

Préférentiellement, les flancs d'engagement peuvent présenter un angle compris entre 1° et 15°.

Par convention et en accord avec la pratique usuelle, les angles des flancs seront définis dans le présent document comme de signe négatif lorsque l'extrémité du même flanc considéré du côté sommet de filet surplombe l'autre extrémité du flanc en fond de filet, et de signe positif dans le cas contraire (cas où il n'y a pas de surplomb).

Préférentiellement, à l'état connecté, la surface distale mâle peut ne pas entrer en contact avec l'épaulement intérieur de l'élément femelle.

Préférentiellement, à l'état connecté, la surface de butée extérieure mâle peut entrer en contact de butée avec la surface distale femelle.

Selon l'invention, l'étanchéité intérieure peut être obtenue par interférence radiale entre une portée d'étanchéité intérieure mâle avec une portée d'étanchéité intérieure femelle correspondante, ménagée dans le logement interne femelle de l'élément femelle. En particulier, si le ratio Epi /Li est trop faible, la rigidité de l'anneau interne est trop faible, ce qui peut rendre instable l'étanchéité intérieure. Selon l'invention le ratio Epi /Li doit être supérieur à 10%. Pour faciliter l'usinage de la partie filetée, sans risquer d'endommager la portée d'étanchéité intérieure mâle, on peut notamment choisir que la dimension Li soit supérieure à 15 mm.

Préférentiellement, la portée d'étanchéité intérieure mâle peut être cylindrique ou conique, ou encore composée d'une portion cylindrique adjacente à une portion conique. Un demi-angle de cône d'une portion conique de la portée d'étanchéité intérieure mâle peut être compris entre 2° et 15°. Et de manière préférentielle, la portée d'étanchéité intérieure femelle peut être torique avec un rayon compris entre 10 et 80 mm ou conique avec un demi-angle de cône compris entre 2° et 15°. Une épaisseur maximale au droit de cette portée d'étanchéité intérieure mâle Esp est supérieure à l'épaisseur Epi de l'anneau interne. Une telle configuration améliore la rigidité dans la zone en interférence entre les portées d'étanchéité intérieures respectivement mâle et femelle.

Par exemple un ratio Epi/ Esp est supérieur ou égal à 1,05, et mieux encore supérieure ou égal à 1,1.

De manière préférentielle, une étanchéité extérieure peut être obtenue par interférence radiale entre une portée d'étanchéité extérieure mâle du logement externe mâle et une portée d'étanchéité extérieure femelle correspondante ménagée sur l'élément femelle dans la lèvre externe femelle. En particulier, si le ratio Epe/Le est trop faible, la rigidité de l'anneau externe est trop faible, ce qui peut rendre instable cette étanchéité extérieure. Selon l'invention le ratio Epe /Le doit être supérieur à 10%. Pour faciliter l'usinage de la partie filetée femelle, sans risquer d'endommager la portée d'étanchéité extérieure femelle, on peut notamment choisir que la dimension Le soit supérieure à 15 mm.

De manière préférentielle, la portée d'étanchéité extérieure mâle peut être torique avec un rayon compris entre 10 et 150 mm ou conique avec un demi-angle de cône compris entre 2° et 15°.

De manière préférentielle la portée d'étanchéité extérieure femelle peut être torique ou conique, le demi-angle du cône étant compris entre 2° et 15°, et telle qu'une épaisseur maximale au droit de cette portée d'étanchéité extérieure femelle Esb est supérieure à l'épaisseur Epe de l'anneau externe.

Par exemple un ratio Epe/ Esb est supérieur ou égal à 1,05, et mieux encore supérieure ou égal à 1,1.

Une telle configuration améliore la rigidité dans la zone en interférence entre les portées d'étanchéité extérieures respectivement mâle et femelle.

Les ratios Epe /Le et Epi /Li selon l'invention sont optimisés pour garantir la stabilité des performances d'étanchéité.

De manière préférentielle, l'élément mâle peut présenter sur son pourtour intérieur un chanfrein se raccordant à l'extrémité distale mâle. Le chanfrein peut présenter un angle β par rapport à un plan orthogonal à l'axe longitudinal du joint pour faciliter l'insertion ou le retrait d'accessoires de contrôles ou de forage. De manière préférentielle, l'angle β peut être compris entre 20° et 30°.

Préférentiellement, le diamètre extérieur maximal de l'élément femelle peut être compris entre 100% et 103% (« semi-flush »), et mieux entre 100.2% et 101 % (« flush ») du diamètre extérieur nominal du deuxième tube.

Préférentiellement, le diamètre intérieur minimal de l'élément mâle peut être inférieur à un diamètre intérieur nominal du premier tube.

D'autres caractéristiques et avantages de l'invention apparaîtront à l'examen de la description détaillée ci-après, et des dessins annexés, sur lesquels :

la figure 1 illustre de façon théorique, dans une vue en coupe longitudinale, un premier joint fileté assemblé en vue globale,
la figure 2 illustre de façon théorique, une vue rapprochée du détail A du joint fileté selon l'invention de la figure 1,
la figure 3 illustre de façon théorique une vue rapprochée du détail B du joint fileté selon l'invention de la figure 1.

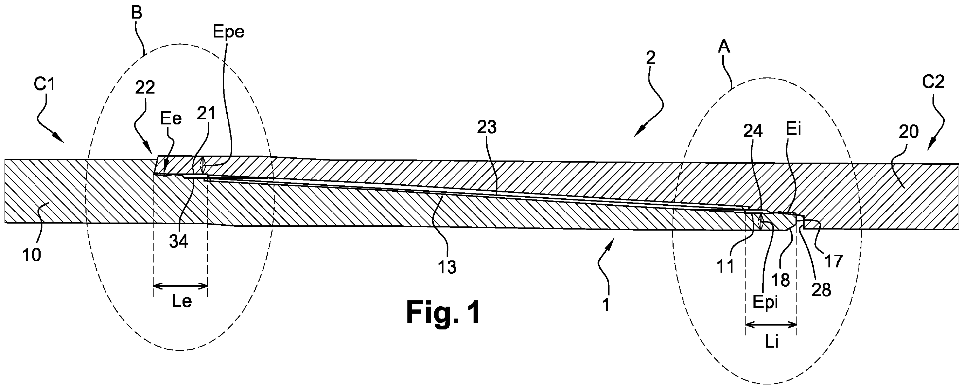

Les vues théoriques des Figures 1 à 3 illustrent les zones des éléments mâle et femelle d'un joint selon l'invention dans une configuration où l'interférence n'est pas résolue. Dans ces vues théoriques, les parties destinées à être mise en interférence de contact se recouvrent localement. En l'espèce, ces parties en interférences sont les portées d'étanchéités intérieures et extérieures. Dans la zone de recouvrement, un hachurage différent est utilisé. Ce hachurage permet d'identifier la différence de diamètre prévue entre les éléments. Dans la zone hachurée, le diamètre extérieur de la partie de l'élément mâle est supérieur au diamètre intérieur de la partie correspondante de l'élément femelle. Une épaisseur radiale de ce hachurage représente la valeur d'interférence radiale, mesurable en millimètres, au droit des portées d'étanchéité. Dans ces vues théoriques, les zones filetées ne sont pas détaillées.

Les Figures 1 à 3 permettent d'appréhender de manière schématique la hauteur radiale d'interpénétration prévue à la conception des éléments mâle et femelle destinés à former le joint selon l'invention.

Evidemment, dans la réalité, la matière des éléments mâle et femelle ne s'interpénètre pas, mais crée localement une zone de contact étanche dite étanchéité métal-métal.

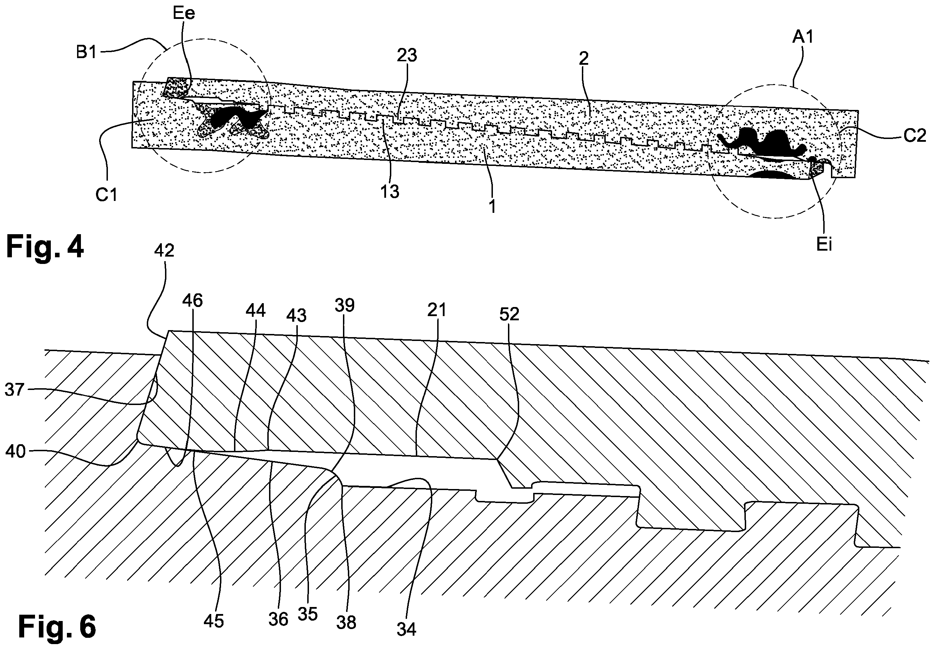

A cet effet, la Figure 4 illustre de façon schématique un joint selon l'invention, en position finale de vissage du joint, avec un dégradé de gris pour indiquer des résultats de l'analyse par éléments finis des contraintes observées au sein d'un joint selon l'invention dans la position finale de vissage. Les zones les plus sombres sont celles où les contraintes sont les plus fortes.

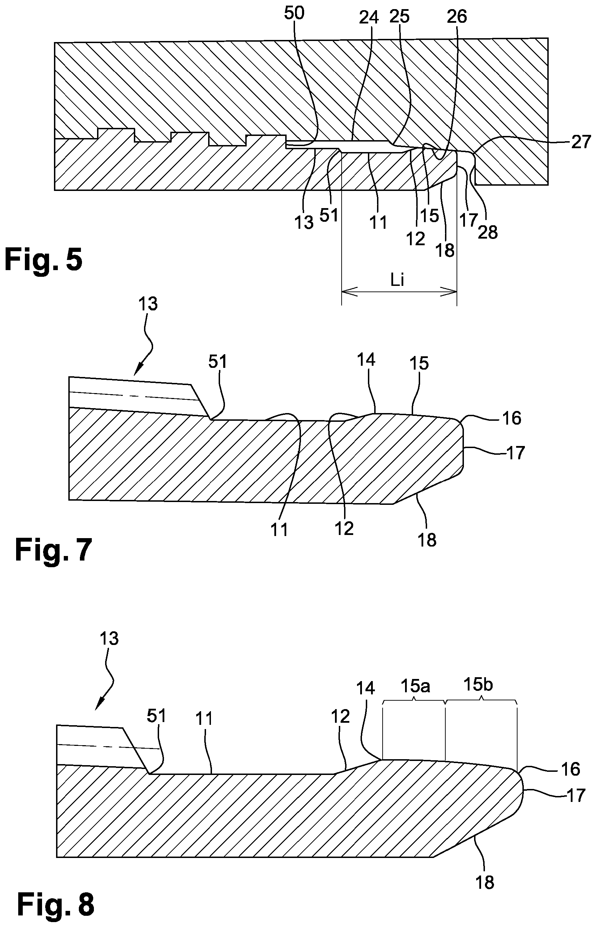

La figure 5 illustre de façon schématique le détail A1 de la Figure 5, en position finale de vissage du joint.

La figure 6 illustre de façon schématique le détail B1 de la Figure 5, en position finale de vissage du joint.

La figure 7 illustre un premier mode de réalisation d'un élément mâle d'un joint selon l'invention, à proximité de son extrémité distale mâle.

La figure 8 illustre un deuxième mode de réalisation d'un élément mâle d'un joint selon l'invention, à proximité de son extrémité distale mâle.

Les dessins annexés pourront non seulement servir à compléter l'invention, mais aussi contribuer à sa définition, le cas échéant. Comme pour tous les dessins de la demande, les représentations illustrent des demi-plans car il existe une symétrie par rapport à l'axe du tube et du joint.

Afin d'améliorer les joints, le demandeur a développé des joints supérieurs, dits premium, hors des standards API. Des portées d'étanchéité peuvent être prévues au voisinage des zones filetées, lesdites portées étant mises en contact serrant lors du vissage des composants. En particulier ces surfaces sont considérées comme choisies pour présenter une interférence radiale.

L'étanchéité aux fluides (liquides et gaz) sous forte pression résulte donc de la mise en contact suivant un serrage radial mutuel des portées d'étanchéité. L'intensité du serrage radial est fonction du positionnement axial relatif des zones filetées mâle et femelle, ledit positionnement relatif pouvant être déterminé par la mise en contact de réaction de butée de surfaces de butées ménagées respectivement sur les éléments mâle et femelle.

De manière préférentielle, seules des butées extérieures mâle et femelle entrent en contact dans un joint selon l'invention.

Des portées d'étanchéité permettent d'empêcher une circulation de fluide (liquides et gaz, à pression ambiante et pression atmosphérique) entre l'intérieur et l'extérieur du joint selon l'invention.

La figure 1 représente un joint selon l'invention formé par vissage d'un composant tubulaire C1 présentant un élément fileté mâle 1 avec un deuxième composant tubulaire C2 muni d'un élément fileté femelle 2. Le joint comporte une étanchéité interne Ei et une étanchéité externe Ee.

Les composants tubulaires C1 et C2 comportent chacun un tube, respectivement 10 et 20. L'élément femelle et l'élément mâle destinés à former le joint selon l'invention sont disposés à l'extrémité de tels tubes. L'élément fileté mâle 1 est disposé à une extrémité du premier tube 10. L'élément fileté femelle 2 est disposé à une extrémité du deuxième tube 20. Les tubes 10 et 20 peuvent présenter plusieurs mètres de longueur, par exemple de l'ordre de 10 à 15 mètres de longueur. Un tube de grande longueur peut être pourvu à une première extrémité d'un élément fileté mâle et à une extrémité opposé d'un élément fileté femelle. L'invention peut néanmoins également s'appliquer à un joint mettant en oeuvre un manchon comportant un tube court pourvu à ses deux extrémités d'éléments filetés femelles.

Le joint selon l'invention peut être utilisé pour constituer des colonnes de tubes de cuvelage ou de production pour les puits d'hydrocarbure, des colonnes montantes sous-marines ou des trains de tiges de forage pour ces mêmes puits.

Les tubes sont de préférence en acier. En effet, ils peuvent être réalisés en différentes sortes d'acier non allié, faiblement allié ou fortement allié, voire en alliage ferreux ou non ferreux, traité thermiquement ou écroui en fonction des conditions de services, tels que par exemple : niveau de sollicitation mécanique, caractère corrosif du fluide intérieur ou extérieur aux tubes, etc. On peut également utiliser des tubes en acier peu résistant à la corrosion recouvert d'un revêtement de protection, par exemple d'un revêtement en alliage résistant à la corrosion ou en matériau synthétique.

Dans la figure 1, l'élément filetée femelle 2 comprend une zone filetée femelle 23. La zone filetée femelle 23 est conique, par exemple de demi-angle de conicité compris entre 0,5° et 3°, préférablement entre 1° et 3°. La zone filetée femelle 23 est disposée sur l'intérieur de l'élément femelle 2. L'élément fileté mâle 1 comprend une zone filetée mâle 13 disposée sur une surface extérieure de ladite extrémité mâle 1. La zone filetée mâle 13 est en prise avec le filetage femelle 23. La zone filetée mâle 13 présente une conicité sensiblement égale à celle de la zone filetée femelle 23.

### Elément fileté mâle 1

La zone filetée mâle 13 est prolongée, en direction d'une extrémité distale libre 17, par une lèvre mâle interne.

La surface extérieure de la lèvre mâle interne est délimitée d'un côté par une extrémité interne de la zone filetée mâle 13, et de l'autre côté par l'extrémité distale libre 17. L'extrémité distale libre 17 s'étend sensiblement radialement relativement à l'axe longitudinal du composant C1.

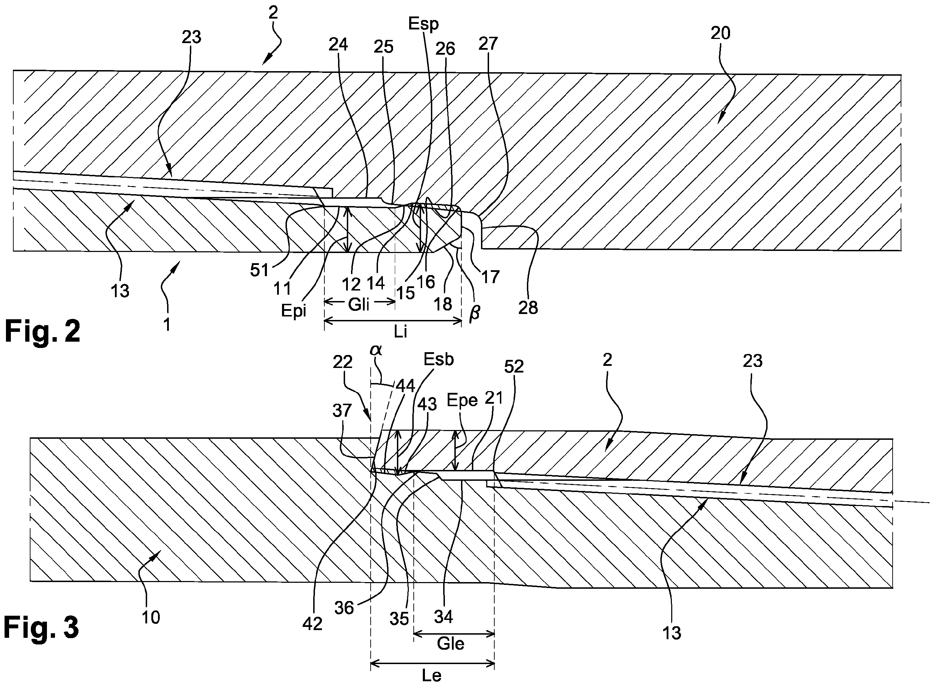

Figures 2 et 5, la lèvre interne mâle comprend donc successivement après la zone filetée mâle 13 en direction de l'extrémité distale libre 17 :

- une première surface 11 adjacente à la zone filetée mâle 13
- une première portion terminale mâle, adjacente à cette première surface 11, et comprenant elle-même successivement :

  - une première surface conique 12 à diamètre croissant vers l'extrémité distale libre 17 avec un demi-angle de cône compris entre 5° et 30°,
  - un raccordement 14 dont le rayon convexe est compris entre 0,4 et 1,4 mm.
  - une portée d'étanchéité intérieure mâle 15, et
  - un deuxième raccordement 16 dont le rayon convexe est compris entre 0,4 et 1 mm, ce deuxième raccordement 16 étant adjacent à l'extrémité distale libre 17.

Figures 5 et 7, la portée d'étanchéité intérieure mâle 15 est conique à diamètre décroissant vers l'extrémité libre mâle. En particulier, pour une portée d'étanchéité conique, le demi-angle est compris entre 2° et 15°, mieux entre 4° et 8°. Alternativement, cette portée d'étanchéité intérieure mâle 15 peut être cylindrique, ou bien torique dont le rayon convexe est compris entre 10 et 80 mm.

En variante, la portée d'étanchéité intérieure mâle 15 peut être complexe, comme représentée à la Figure 8. Une portée d'étanchéité intérieure mâle 15 complexe est composée d'une portion cylindrique 15a, reliée au premier raccordement 14, et d'une portion conique 15b à diamètre décroissant vers l'extrémité libre mâle 17, jusqu'au deuxième raccordement 16. Les portions respectivement cylindrique 15a et conique 15b sont adjacentes. Le demi-angle de la portion conique 15b est compris entre 2° et 15°, mieux entre 7,5° et 10°. Par exemple, pour les composants tubulaires dont le tube est de diamètre extérieur nominal inférieur à 355,6 mm (14 pouces), la portée d'étanchéité mâle 15 est complexe.

La lèvre interne mâle présente une longueur Li mesurée axialement, cette longueur Li étant la plus petite distance, mesurée le long de l'axe longitudinal des composants C1 et C2, entre la zone filetée mâle 13 et un apex de la surface distale libre mâle 17. L'usinage de l'hélice destinée à former la zone filetée mâle 13 commence à partir d'un décrochement d'usinage 51 (« run-in »), représenté Figures 2, 5, 7 et 8. Le décrochement d'usinage 51 délimite la zone filetée mâle 13 de la première surface 11. Le décrochement d'usinage 51 situé du côté de la surface distale 17, constitue l'extrémité interne de la zone filetée mâle 13, La longueur de la lèvre Li est mesurée entre ce décrochement 51 et l'apex de la surface distale 17.

La première surface 11 définit un anneau interne. Cet anneau interne peut être un cylindre. Dans l'exemple représenté, la première surface 11 comporte une génératrice parallèle à l'axe des composants C1 et C2, qui est également parallèle à l'axe longitudinal du joint.

Une épaisseur de paroi Epi de l'anneau interne au droit de cette première surface 11 est alors constante le long de l'ensemble de la première surface 11, ce qui permet de délimiter ladite première surface 11.

La portion d'épaisseur Epi constante représente axialement une distance Gli pouvant couvrir au moins un tiers, et mieux au moins 45% de la longueur Li.

Alternativement lorsque l'anneau interne n'est pas un cylindre, la grandeur Epi considérée selon l'invention est l'épaisseur de paroi minimale observée entre la partie filetée 13 et la portée d'étanchéité intérieure mâle 15.

En particulier, l'épaisseur Epi est inférieure à l'épaisseur radiale Esp observée au droit de la portée d'étanchéité intérieure mâle 15.

De manière optionnelle, un chanfrein 18 présentant un angle β par rapport à la surface distale libre mâle 17. L'angle β est compris entre 20° et 30°. Le chanfrein 18 présente donc une forme conique à diamètre croissant vers l'extrémité distale libre 17, c'est-à-dire vers la surface de butée mâle. Le chanfrein 18 permet l'insertion, dans la colonne obtenue par connexion de plusieurs tubes par vissage, d'accessoires de contrôle voire d'accessoires de forage aux diamètres plus petits mais proches de celui des tubes selon l'invention. Cette insertion est ainsi facilitée et il est évité un accrochage au niveau de la connexion. Le retrait de l'accessoire est aussi facilité.

Cette configuration avec différence de diamètre et chanfrein permet l'insertion d'accessoires de contrôles ou de forage à l'intérieur même du tube sans risquer d'accrocher une extrémité du tube du fait des surépaisseurs aussi appelées excroissances utiles à l'amélioration de la résistance à la flexion.

En outre, cet élément fileté mâle 1 comporte, sur sa périphérie extérieure dans un prolongement de la zone filetée mâle 13 en direction du corps du tube 10, un logement externe mâle tel qu'illustré aux figures 3 et 6. Le logement externe mâle comporte une deuxième surface 34, cette deuxième surface 34 pouvant être immédiatement adjacente à la zone filetée mâle 13.

Ladite deuxième surface 34 est elle-même prolongée, toujours en direction du corps du tube 10, par une seconde portion terminale externe. Ladite seconde portion terminale externe, tel qu'illustré aux figures 3 et 6, comprend successivement:

- un premier raccordement 38 entre la deuxième surface 34 et une deuxième surface conique 35, ce raccordement 38 pouvant former une partie rayonnée concave
- la surface conique 35 présentant un diamètre croissant en direction du corps de tube 10, avec un demi-angle de cône compris entre 5° et 45°,
- un deuxième raccordement 39 dont le rayon convexe est compris entre 1mm et 8 mm, ce rayon pouvant aussi être supprimé si les sorties d'outils le permettent.
- une portée d'étanchéité extérieure mâle 36 torique avec un rayon compris entre 10 et 150 mm ou conique à diamètre croissant vers une butée extérieure 22 avec un demi-angle de cône compris entre 2° et 15°,
- un dernier raccordement 40 de rayon concave étant adjacent à une surface de butée extérieure 37.

La surface de butée extérieure 37 présente un angle positif $\alpha$ par rapport à la perpendiculaire à l'axe longitudinal du joint. L'angle positif est orienté dans le sens trigonométrique soit dans le sens des aiguilles d'une montre. L'angle positif $\alpha$ est compris entre 5° et 45°. Le dernier raccordement 40 s'étant sur un arc angulaire tel qu'un angle aigu peut être formé entre la portée d'étanchéité extérieure mâle 36 et la surface de butée extérieure mâle 37.

### Elément fileté femelle 2

L'élément fileté femelle 2 comprend sur sa périphérie intérieure une zone filetée 23, destinée à permettre le vissage avec l'élément fileté mâle 13 correspondant, avec de part et d'autres de la zone filetée 23 une configuration que nous allons décrire à travers les lignes suivantes.

Figure 2, l'élément fileté femelle comporte un logement interne femelle en regard de la lèvre interne mâle. Ce logement interne femelle comporte, successivement dans le sens allant de la zone filetée femelle 23 vers un épaulement intérieur 28 :

- une première surface femelle 24
- une première portion terminale femelle comprenant successivement:

  - un raccordement 25 à la première surface 24, ce raccordement 25 présentant un rayon convexe compris entre 0,8 mm et 10 mm.
  - une portée d'étanchéité intérieure femelle 26 torique avec un rayon compris entre 10 et 80 mm ou conique à diamètre décroissant vers la butée intérieure 28 avec un demi-angle de cône compris entre 2° et 15°. Cette portée d'étanchéité 26 étant apte à entrer en contact interférent avec la portée d'étanchéité intérieure mâle 15 correspondante. La portée d'étanchéité intérieure femelle 26 peut avoir la même conicité que celle de la portée d'étanchéité intérieure mâle 15.
  - un raccordement 27 dont le rayon concave est compris entre 0,4mm et 2 mm, ce raccordement 27 raccordant la portée d'étanchéité intérieure femelle 26 à l'épaulement intérieur 28.

Dans un mode de réalisation préféré de l'invention la portée d'étanchéité intérieure femelle 26 est conique.

L'épaulement intérieur 28 est orienté de préférence radialement par rapport à l'axe longitudinal du joint.

Cependant à l'état connecté, dans le mode de réalisation représenté, aux figures 1 et 2, il existe un jeu axial entre l'épaulement intérieur 28 et la surface distale libre mâle 17. Les deux surfaces 17 et 28 n'entrent donc pas au contact à l'état connecté. Ceci a pour effet d'éviter d'avoir un contact de butée au niveau de la lèvre intérieure qui aurait pour conséquence d'augmenter la flexion de la lèvre en ajoutant des contraintes de compression au niveau des surfaces 17 et 28 lorsque la connexion est sous compression. Enfin, à l'état connecté, on remarque qu'il existe un jeu radial entre les premières surfaces 11 et 24 afin de créer un dégagement permettant d'accueillir de la graisse piégée dans le filetage.

Le raccordement 25 peut être supprimé si les sorties d'outils d'usinage le permettent. La suppression du raccordement 25 permet d'améliorer encore les performances en vissage.

L'extrémité femelle, telle qu'illustrée sur la figure 3, comporte de plus sur sa périphérie intérieure, dans le prolongement de la zone filetée 23, en direction de son extrémité libre 42, une lèvre femelle externe. Ladite lèvre femelle externe inclut une deuxième surface 21 et une deuxième portion terminale dans le prolongement de la deuxième surface femelle 21, en direction de la butée extérieure 42. Cette deuxième portion terminale femelle comprend successivement :

- une surface torique convexe 43 avec un rayon compris entre 5 mm et 40 mm.

- une portion conique 44 à diamètre décroissant vers l'extrémité libre femelle, raccordée par un point d'inflexion 45 à
- une portée d'étanchéité extérieure femelle 46 torique convexe ou conique à diamètre décroissant vers l'extrémité libre femelle. Dans l'exemple représenté, la portée d'étanchéité extérieure femelle 44 est conique, le demi-angle du cône est compris entre 2° et 15°. Cette portée d'étanchéité 46 est apte à entrer en contact interférent avec la portée d'étanchéité extérieure mâle 36 correspondante.
- la surface de butée 42 présentant un angle positif $\alpha$ par rapport à la perpendiculaire à l'axe longitudinal du joint. L'angle positif est orienté dans le sens trigonométrique soit dans le sens des aiguilles d'une montre. L'angle positif $\alpha$ est compris entre 5° et 45°. Cette surface de butée est apte à entrer en contact avec la surface de butée extérieure mâle 37 correspondante. Cet angle positif $\alpha$ permet un placage de la butée de la surface de butée femelle 42 sur la surface de butée mâle 37 afin d'augmenter les pressions de contact.

La lèvre externe femelle présente une longueur Le mesurée axialement, le long de l'axe longitudinal des composants C1 et C2, cette longueur Le étant la plus petite distance entre la zone filetée femelle 23 et un apex de l'extrémité distale de la surface de butée 42. L'usinage de l'hélice destinée à former la zone filetée femelle 23 commence à partir d'un décrochement d'usinage 52 (« run-in »), représenté Figures 1, 3 et 6. Le décrochement d'usinage 52 délimite la zone filetée femelle 23 de la deuxième surface femelle 21. Le décrochement d'usinage 52 situé du côté de la surface distale de butée 42, constitue l'extrémité externe de la zone filetée femelle 23, La longueur de la lèvre Li est mesurée entre ce décrochement 52 et l'apex de la surface distale de butée femelle 42.

La deuxième surface 21 définit un anneau externe. Cet anneau externe peut être un cylindre. Dans l'exemple représenté, la deuxième surface 21 comporte une génératrice parallèle à l'axe des composants C1 et C2, qui est également parallèle à l'axe longitudinal du joint.

Une épaisseur Epe de l'anneau externe au droit de cette deuxième surface 21 est constante le long de l'ensemble de la deuxième surface 21, ce qui permet de délimiter cette deuxième surface 21.

La portion d'épaisseur Epe constante représente axialement une distance Gle pouvant couvrir au moins un tiers, et mieux au moins 45% de la longueur Le.

Alternativement, lorsque l'anneau externe n'est pas un cylindre, la grandeur Epe selon l'invention représente l'épaisseur minimale observée entre la partie filetée femelle 23 et la portée d'étanchéité extérieure femelle 44.

En particulier, l'épaisseur Epe est inférieure à l'épaisseur radiale Esb observée au droit de la portée d'étanchéité extérieure femelle 44.

A l'état connecté tel qu'illustré à la figure 1 et 3, il peut exister un contact interférent i.e. avec interpénétration de matière, au niveau de la butée externe 22. De plus, les surfaces de raccordement 36 et 43 peuvent également entrer en contact interférent dans le sens radial, créant ainsi une meilleure étanchéité.

Enfin, à l'état connecté, il existe un jeu radial entre les deuxièmes surfaces 21 et 34 afin de créer un dégagement permettant d'accueillir de la graisse piégée dans le filetage.

Les raccordements sont optionnels.

## Exemples

Le demandeur s'est intéressé aux joints filetés de grand diamètre, en particulier ceux supérieurs à 127 mm, tout en étant inférieurs à 460 mm, préférentiellement inférieurs à 406.4 mm i.e. 16 pouces. De tels joints sont parfois soumis à des efforts de pressions intérieure et extérieure importants en plus des efforts de traction/compression. Ces niveaux de pression ont tendance à induire des déformations plastiques importantes en flexion des lèvres interne et externe dégradant par conséquent les propriétés d'étanchéité de ces connexions. La résistance à la traction a aussi été prise en considération dans le joint selon l'invention.

En effet, lorsque l'effort de traction est excessif, les filets peuvent s'écarter les uns des autres par un phénomène de désengrènement qui provoque la séparation des deux composants du joint. Les conséquences peuvent être particulièrement fâcheuses d'un point de vue technique et en raison de leur coût. Cela est particulièrement le cas lorsque le filetage est à génératrice tronconique, le saut d'un filet pouvant provoquer la désolidarisation complète du joint.

Le joint selon l'invention réduit ainsi le risque de saut de filet indépendamment de la position du filet, à couple de vissage faible, permettant un bon positionnement des surfaces d'étanchéité et présentant des espaces suffisants pour la graisse. Ces espaces sont obtenus par les surfaces de part et d'autre du filetage.

De manière préférentielle, dans le joint selon l'invention, l'étanchéité intérieure est de type « cône sur cône » et l'étanchéité extérieure est de type « cône sur cône ».

Le contact « cône sur cône » est stable entre les portées d'étanchéité, pendant les chargements combinés, et c'est une bonne configuration afin d'améliorer les performances en vissage. Les étanchéités « cône sur cône » limitent les risques de grippage au vissage.

Une étanchéité « tore sur cône » peut aussi être utilisée. Elle peut permettre de compenser les effets de la flexion de la lèvre interne sous contraintes de pression intérieure. La portée de l'élément fileté mâle tourne légèrement, mais le rayon qui constitue la portée d'étanchéité intérieure mâle 15 étant large, le contact reste toujours opérant en configuration tore sur cône en se déplaçant légèrement le long de la portée d'étanchéité complémentaire femelle.

Le diamètre maximum extérieur de l'extrémité femelle est supérieur au diamètre maximum extérieur de l'extrémité mâle. Au niveau des diamètres intérieurs, le diamètre intérieur de l'extrémité femelle est supérieur au diamètre maximum intérieur de l'extrémité mâle.

En particulier, les demandeurs ont observé les résultats suivants :

| Diamètre extérieur nominal (mm) | 298,45 | 355,60 | 355,60 | 346,08 |
|---|---|---|---|---|
| Épaisseur tube (mm) | 12,42 | 20,62 | 20,62 | 15,88 |
| Epi min-max (mm) | 3.6 - 4.1 | 5.1 - 5.5 | 5.1 - 5.5 | 4.3 - 4.7 |
| Gli Longueur anneau intérieur (mm) | 7,57 | 8,33 | 8,25 | 8,42 |
| Li min-max (mm) | 15 - 16 | 16 - 17 | 16 - 17 | 16 - 17 |
| Epe min-max (mm) | 3.6 - 3.9 | 5.5 - 5.8 | 5.5 - 5.8 | 4.9 - 5.2 |
| Gle Longueur anneau extérieur (mm) | 8.76 | 10.00 | 10.01 | 8.88 |
| Le min-max (mm) | 17 - 18 | 17 - 18 | 17 - 18 | 19 - 20 |
| Epi/Li | 24.7 % | 33% | 33% | 28% |
| Epe/Le | 22% | 33% | 33% | 26% |
| Niveau de qualification atteint | Non qualifié Fuite sous test de pression interne | Qualifié API RP 5C5 2015 CAL II | Qualifié API RP 5C5 2015 CAL II | Qualifié API RP 5C5 2015 CAL II |

En particulier, les demandeurs ont optimisé le ratio Epi/Li pour les diamètres extérieurs de tube, au niveau de leur section nominale, supérieur à 200 mm, voire supérieur à 250 mm, et ils ont choisi un ratio Epi/Li supérieur ou égal à 25 % pour ce type de configuration.

L'optimisation peut se faire en combinaison des paramètres de diamètres extérieurs supérieur à 200 mm, avec ceux d'épaisseurs de paroi de tube (à distance du joint) comprise entre 10 et 25 mm, et de choisir un ratio Epi/Li supérieur ou égal à 25 % pour ce type de configuration.

L'optimisation peut se faire encore en combinaison des trois paramètres, à savoir le paramètre de diamètre extérieur supérieur à 200 mm, avec le paramètre d'épaisseur de paroi de tube (à distance du joint) comprise entre 10 et 25 mm, et le paramètre de type de joint de type flush, et de choisir un ratio Epi/Li supérieur ou égal à 25 % pour ce type de configuration.

En particulier, la lèvre mâle interne doit respecter l'équation suivante:

$$10\% \leq Epi \, (mm)/Li \, (mm) \leq 80\%$$

Avantageusement, la lèvre femelle externe doit respecter l'équation suivante :

$$10\% \leq Epe \, (mm)/Le \, (mm) \leq 80\%$$

L'invention consiste aussi à dimensionner les lèvres intérieure et extérieure de telle sorte que ces lèvres puissent résister aux niveaux de pression intérieure et extérieure auxquels la connexion est soumise.

La zone filetée femelle 23 comprend des filets de longueur axiale au voisinage du sommet supérieure à la longueur axiale au voisinage de la base. La zone filetée mâle 13 comprend des filets de longueur axiale au voisinage du sommet supérieure à la longueur axiale au voisinage de la base. L'angle d'inclinaison d'un flanc d'engagement d'un filetage selon l'invention est positif, angle pris par rapport à un plan radial perpendiculaire à l'axe du joint. L'angle d'inclinaison d'un flanc porteur d'un filet selon l'invention est négatif, angle pris par rapport à un plan radial perpendiculaire à l'axe du joint. Dans un mode de réalisation préféré, les filets sont à profil en queue d'aronde. Alternativement, l'angle d'inclinaison d'un flanc porteur est différent de l'angle d'inclinaison d'un flanc d'engagement. Dans une autre alternative, l'angle d'inclinaison d'un flanc d'engagement de la zone filetée femelle 23 est égal à l'angle d'inclinaison d'un flanc d'engagement de la zone filetée mâle 13. L'angle d'inclinaison d'un flanc porteur de la zone filetée femelle 23 est sensiblement égal à l'angle d'inclinaison d'un flanc porteur de la zone filetée mâle 13.

Un filetage selon l'invention comprend un sommet un fond un flanc porteur et un flanc d'engagement. Des congés de raccordement sont prévus entre flancs et sommet et entre flancs et fond. La largeur des sommets et des fonds varie en fonction de la position du filet correspondant le long de l'axe du tube. Ladite largeur L peut s'exprimer sous la forme : L = La + A x, avec La et A des constantes et x la position le long de l'axe. La largeur est prise parallèlement à l'axe du joint selon l'invention. Le diamètre des sommets et des fonds varie en fonction de la position du filet correspondant le long de l'axe du tube en raison de la conicité du filetage. Les sommets et les fonds des filets sont parallèles à l'axe du joint fileté. Ceci facilite l'usinage et l'engagement lors du vissage.

La zone filetée mâle 13 peut présenter une première portion dans laquelle la largeur des dents est croissante depuis une valeur correspondant à la largeur de la dent la plus proche d'une portion terminale de l'extrémité mâle jusqu'à une valeur correspondant à la largeur de la dent la plus éloignée de ladite portion terminale, tandis que la largeur des dents de la zone filetée femelle 23 est décroissante depuis une valeur correspondant à la largeur de la dent la plus éloignée d'une portion terminale de l'extrémité femelle jusqu'à une valeur correspondant à la largeur de la dent la plus proche de ladite portion terminale, de sorte que les zones filetées 13, 23 coopèrent suivant un vissage laissant un jeu axial entre les flancs d'engagement.

Le rapport entre la largeur de la dent la plus proche d'une portion terminale de l'extrémité mâle et la largeur de la dent la plus éloignée de la surface terminale de l'extrémité femelle peut être compris entre 0,1 et 0,8 en valeur absolue.

Le filetage selon l'invention présente une largeur variable de filets. Un jeu axial entre les flancs d'engagement est présent à l'état connecté, en fin de vissage, de même qu'un jeu radial est présent entre les fonds et les sommets de filets à l'état connecté.

Les flancs porteurs des filets sont à angle négatif dans le sens trigonométrique, qui est le sens retenu pour tous les angles de la présente description de l'invention. Les flancs d'engagement des filets sont à angle positif. Une butée extérieure permet un bon positionnement des surfaces d'étanchéité.

Le filetage présente une largeur de dent croissante le long du filetage. En effet, les fonds de filets mâles ont une largeur qui croit vers l'intérieur du tube tandis que les têtes de filets mâle vont en sens inverse et vice versa pour le filetage femelle.

A l'état connecté (après make-up), un jeu radial est présent entre les sommets du filetage de la zone filetée mâle 13 et les fonds du filetage de la zone filetée femelle 23. Le jeu radial est de l'ordre de 0,05 mm à 0,5 mm. Le choix du jeu radial à l'état connecté peut être guidé par le volume de graisse souhaité et les tolérances d'usinage. Un jeu inférieur ou égal à 0,15 mm est souhaitable lorsque l'usinage est de qualité.

A l'état connecté (après make-up), un jeu axial est présent entre les flancs d'engagement des filets de la zone filetée mâle et femelle respectivement. Le jeu axial est de l'ordre de 0,002 mm à 1 mm. Le choix du jeu axial à l'état connecté peut être guidé par le volume de graisse souhaité, l'angle des flancs et les tolérances d'usinage. Un jeu inférieur ou égal à 0,05 mm est souhaitable lorsque l'usinage est bien maîtrisé et l'angle des flancs inférieur ou égal à 5° en valeur absolue. Les flancs porteurs reprennent les efforts de serrage à l'état connecté.

Le flanc porteur des filets de la zone filetée femelle 23 est incliné par rapport à un plan radial de façon à interférer avec le flanc porteur correspondant incliné des filets de la zone filetée mâle 13 pour améliorer la résistance en cas de déformation élastique du joint, notamment sous effort de traction, avec ou sans pression interne. A ce niveau, l'interférence est radiale pour conserver la liaison entre les filetages. Les filetages forment mutuellement des crochets de retenue radiale. L'inclinaison du flanc porteur mâle comme femelle est comprise entre -1° et -15°. Au-dessus de -1°, l'effet de retenue radiale devient faible. En dessous de -15°, la résistance en compression peut en être affectée. Une plage préférée s'étend de -3° à -5°. Une différence de l'inclinaison des flancs porteurs mâle et femelle peut être tolérée à 3° près.

Le flanc d'engagement des filets de la zone filetée femelle 23 est incliné par rapport à un plan radial de façon à interférer avec le flanc d'engagement correspondant incliné des filets de la zone filetée mâle 13 pour améliorer la résistance en cas de déformation élastique du joint, notamment sous effort de traction, avec ou sans pression interne. L'interférence est radiale pour conserver la liaison entre les filetages. Les filetages forment mutuellement des crochets de retenue radiale. L'inclinaison du flanc d'engagement mâle comme femelle est comprise entre 1° et 15°. En dessous de 1°, l'effet de retenue radiale devient faible. Au-dessus de 15°, la résistance en compression peut en être affectée. Une plage préférée s'étend de 3° à 5°. Une différence de l'inclinaison des flancs d'engagement mâle et femelle peut être tolérée à 3° près.

L'inclinaison du flanc d'engagement mâle et femelle peut être égale ou différente de l'inclinaison du flanc porteur mâle et femelle, par exemple à 3° près.

Les congés de raccordement peuvent être compris entre 0,005 et 3 mm. Les congés de raccordement arrondis réduisent la concentration de contraintes au pied des flancs porteurs et améliorent ainsi la tenue en fatigue du joint selon l'invention.

Les zones filetées femelle 23 et mâle 13 sont à plusieurs hélices de préférence à double hélice. Le vissage peut ainsi être plus rapide.

Les flancs présentent préférentiellement un profil en queue d'aronde. La géométrie des filets en queue d'aronde augmente la rigidité radiale de leur assemblage par rapport à des filets dont la largeur axiale va en diminuant de façon monotone de la base au sommet des filets.

Les flancs peuvent présenter un profil en trapèze. Le jeu axial entre des flancs d'engagement peut être compris entre 0,002 et 1 mm, préférablement entre 0,05 et 0,5 mm.

Le jeu radial peut être prévu au fond des filets du premier composant et/ou au sommet des filets du premier composant. Le jeu radial peut être compris entre 0,05 et 0,5 mm, préférablement entre 0,05 et 0,15 mm.

Des flancs porteurs peuvent présenter un angle compris entre -1° et -15°, préférablement entre -3° et -5°. Des flancs d'engagement peuvent présenter un angle compris entre 1° et 15°, préférablement entre 3° et 5°. Des flancs porteurs peuvent présenter un angle différent des flancs d'engagement.

L'invention ne se limite pas aux exemples de joints et tubes décrits ci-avant, seulement à titre d'exemple, mais elle englobe toutes les variantes que pourra envisager l'homme de l'art dans le cadre des revendications ci-après.

**Revendications**

1.  Joint fileté comprenant un premier et un second composants tubulaires vissés l'un avec l'autre,

    le premier composant (C1) comportant un premier tube (10) et un élément mâle disposé à une extrémité dudit premier tube, l'élément mâle comportant successivement sur sa surface périphérique extérieure:

    - une surface distale mâle (17)
    - une lèvre interne mâle comportant un anneau interne (11) d'épaisseur minimale Epi,
    - une zone filetée mâle (13), tel qu'une extrémité interne de cette zone filetée mâle est à une distance axiale non nulle (Li) de la surface distale mâle,
    - un logement externe mâle (34), et
    - un épaulement extérieur (37) pouvant former une surface de butée extérieure mâle,

    le second composant (C2) comportant un deuxième tube (20) et un élément femelle disposé à une extrémité dudit deuxième tube, l'élément femelle comportant successivement sur sa surface périphérique intérieure:

    - un épaulement intérieur (28),
    - un logement interne femelle (24), disposé en regard de la lèvre interne mâle,
    - une zone filetée femelle (23),
    - une lèvre externe femelle comportant un anneau externe (21) d'épaisseur minimale Epe, et
    - une surface distale femelle (42) pouvant coopérer en réaction de butée avec la surface de butée extérieure mâle, cette surface distale femelle étant située à une distance axiale non nulle (Le) d'une extrémité externe de la zone filetée femelle,

    tel qu'en position vissée du joint, un jeu radial subsiste entre l'anneau interne mâle et le logement interne femelle, un jeu radial subsiste entre l'anneau externe femelle et le logement externe mâle, une étanchéité intérieure (Ei) étant formée localement entre la lèvre interne mâle et le logement interne femelle, l'étanchéité intérieure (Ei) comporte une portée d'étanchéité intérieure mâle (15) apte à venir en contact interférent avec une portée d'étanchéité intérieure femelle (26) correspondante ménagée sur l'élément femelle, la portée d'étanchéité intérieure mâle (15) étant torique avec un rayon compris entre 10 et 80 mm ou conique avec un demi-angle de cône compris entre 2° et 15°, et
    caractérisé en ce
    tettequ'une épaisseur maximale au droit de cette portée d'étanchéité intérieure mâle (Esp) est supérieure à l'épaisseur (Epi) de l'anneau interne, le joint étant tel que :

$$10\% \le E_{pi}/L_i$$

**2.** Joint fileté selon la revendication 1, **caractérisé en ce que** l'un du premier ou du second composant présente un diamètre nominal extérieur de tube à distance de leurs éléments respectivement mâle et/ou femelle, tel que ce diamètre nominal de tube est supérieur à 200 mm, et préférentiellement supérieur à 250 mm, le joint étant alors tel que :

$$25\% \leq Epi/Li$$

**3.** Joint fileté selon la revendication 1 ou 2, **caractérisé en ce que** le joint est tel que :

$$10\% \leq Epe/Le$$

**4.** Joint fileté selon l'une quelconque des revendications précédentes **caractérisé en ce que** le joint est tel que :

$$15\% \leq Epe/Le,$$

et préférentiellement

$$20\% \leq Epe/Le$$

**5.** Joint fileté selon l'une quelconque des revendications précédentes **caractérisé en ce que** le joint est tel que :

$$Epi/Li \leq 80\%,$$

et préférentiellement

$$Epi/Li \leq 60\%,$$

et encore mieux

$$Epi/Li \leq 50\%.$$

**6.** Joint fileté selon l'une quelconque des revendications précédentes **caractérisé en ce que** le joint est tel que :

$$Epe/Le \leq 80\%,$$

et préférentiellement

$$Epe/Le \leq 60\%,$$

et encore mieux

$$Epe/Le \leq 50\%.$$

**7.** Joint fileté selon l'une quelconque des revendications précédentes **caractérisé en ce que** le joint est tel que

$$15 \text{ mm} \leq Li \leq 25 \text{ mm}$$

**8.** Joint fileté selon l'une quelconque des revendications précédentes **caractérisé en ce que** le joint est tel que

$$15 \text{ mm} \leq \text{Le} \leq 25 \text{ mm}$$

**9.** Joint fileté l'une quelconque des revendications précédentes **caractérisé en ce que** les zones filetées (13, 23) comportent des filets respectivement mâles et femelles de largeur croissante, les filets comprenant des flancs porteurs présentant des angles négatifs, et des flancs d'engagement présentant un angle positif, un jeu radial subsistant à l'état connecté entre des sommets des filets mâles et des fonds des filets femelles et/ou entre des sommets des filets femelles et des fonds des filets mâles, un jeu axial subsistant à l'état connecté entre les flancs d'engagement des filets mâle et femelle.

**10.** Joint fileté selon l'une quelconque des revendications précédentes **caractérisé en ce que** la surface de butée extérieure mâle (37) présente un angle $\alpha$ positif par rapport à une perpendiculaire à l'axe longitudinal du joint, et **en ce que** la surface de butée extérieure femelle (42) présente un même angle $\alpha$, l'angle $\alpha$ étant compris entre 5° et 45°.

**11.** Joint fileté selon l'une quelconque des revendications précédentes **caractérisé en ce qu'**à l'état connecté, la surface de butée intérieure (17) de l'extrémité mâle n'entre pas en contact avec la surface de butée intérieure (28) de l'extrémité femelle.

**12.** Joint fileté selon l'une quelconque des revendications précédentes **caractérisé en ce qu'**à l'état connecté, la surface de butée extérieure (37) de l'extrémité mâle entre en contact de butée avec la surface de butée extérieure (42) de l'extrémité femelle.

**13.** Joint fileté selon la revendication 12 dans lequel la portée d'étanchéité intérieure femelle (26) est cylindrique et ou conique, le demi-angle du cône étant compris entre 2° et 15°.

**14.** Joint fileté selon l'une quelconque des revendications précédentes **caractérisé en ce qu'**il comporte une étanchéité extérieure obtenue par interférence entre une portée d'étanchéité extérieure mâle (36) et une portée d'étanchéité extérieure femelle (44) correspondante ménagée sur l'élément femelle.

**15.** Joint fileté selon la revendication 14 dans lequel la portée d'étanchéité extérieure mâle (36) est torique avec un rayon compris entre 10 et 150 mm, ou conique avec un demi-angle de cône compris entre 2° et 15°.

**16.** Joint fileté selon les revendications 14 ou 15 dans lequel la portée d'étanchéité extérieure femelle (44) est torique ou conique, le demi-angle du cône étant compris entre 2° et 15°, et telle qu'une épaisseur maximale au droit de cette portée d'étanchéité extérieure femelle (Esb) est supérieure à l'épaisseur (Epe) de l'anneau extérieur.

**17.** Joint fileté selon l'une quelconque des revendications précédentes dans lequel la butée intérieure (17) présente sur sa partie inférieure un chanfrein (12) avec un angle négatif $\beta$ par rapport à l'axe longitudinal du joint pour faciliter l'insertion ou le retrait d'accessoires de contrôle ou de forage.

**18.** Joint fileté selon la revendication 17 dans lequel l'angle négatif $\beta$ est compris entre -20° et -30°.

**19.** Joint fileté selon l'une quelconque des revendications précédentes dont le diamètre extérieur maximal de l'élément femelle est compris entre 100.2% et 101% du diamètre extérieur nominal du deuxième tube.

**20.** Joint fileté selon l'une quelconque des revendications précédentes dont le diamètre intérieur minimal de l'élément mâle est inférieur à un diamètre intérieur nominal du premier tube.

**Patentansprüche**

**1.** Gewindeverbindung, welche eine erste und eine zweite rohrförmige Komponente umfasst, die miteinander verschraubt sind,

wobei die erste Komponente (C1) ein erstes Rohr (10) und ein Einsteckelement, das an einem Ende des ersten Rohres angeordnet ist, aufweist, wobei das Einsteckelement auf seiner äußeren Umfangsfläche nacheinander aufweist:

- eine distale Einsteckfläche (17),
- eine innere Einstecklippe, die einen inneren Ring (11) mit einer minimalen Dicke Epi aufweist,
- einen Außengewindebereich (13), derart, dass sich ein inneres Ende dieses Außengewindebereichs in einem von null verschiedenen axialen Abstand (Li) von der distalen Einsteckfläche befindet,
- einen äußeren Einstecksitz (34) und
- eine äußere Schulter (37), die eine äußere Einsteck-Anschlagfläche bilden kann,

wobei die zweite Komponente (C2) ein zweites Rohr (20) und ein Aufnahmeelement, das an einem Ende des zweiten Rohres angeordnet ist, aufweist, wobei das Aufnahmeelement auf seiner inneren Umfangsfläche nacheinander aufweist:

- eine innere Schulter (28),
- einen inneren Aufnahmesitz (24), der gegenüber der inneren Einstecklippe angeordnet ist,
- einen Innengewindebereich (23),
- eine äußere Aufnahmelippe, die einen äußeren Ring (21) mit einer minimalen Dicke Epe aufweist, und
- eine distale Aufnahmefläche (42), die in Anschlagreaktion mit der äußeren Einsteck-Anschlagfläche zusammenwirken kann, wobei sich diese distale Aufnahmefläche in einem von null verschiedenen axialen Abstand (Le) von einem äußeren Ende des Innengewindebereichs befindet,

derart, dass in der verschraubten Position der Verbindung ein radiales Spiel zwischen dem inneren Einsteckring und dem inneren Aufnahmesitz verbleibt, ein radiales Spiel zwischen dem äußeren Aufnahmering und dem äußeren Einstecksitz verbleibt, wobei eine innere Abdichtung (Ei) lokal zwischen der inneren Einstecklippe und dem inneren Aufnahmesitz gebildet wird, die innere Abdichtung (Ei) eine innere Einsteck-Dichtfläche (15) aufweist, die geeignet ist, mit einer entsprechenden inneren Aufnahme-Dichtfläche (26), die an dem Aufnahmeelement ausgebildet ist, in Eingriffskontakt zu kommen, wobei die innere Einsteck-Dichtfläche (15) torisch mit einem Radius zwischen 10 und 80 mm oder konisch mit einem Kegelhalbwinkel zwischen 2° und 15° ist, und **dadurch gekennzeichnet, dass** eine maximale Dicke an dieser inneren Einsteck-Dichtfläche (Esp) größer als die Dicke (Epi) des inneren Ringes ist, wobei die Verbindung so beschaffen ist, dass gilt:

$$10\ \% \leq Epi/Li.$$

2. Gewindeverbindung nach Anspruch 1, **dadurch gekennzeichnet, dass** eine von der ersten und der zweiten Komponente einen solchen Nenn-Rohraußendurchmesser in einem Abstand von ihrem Einsteck- bzw. Aufnahmeelement aufweist, dass dieser Nennrohrdurchmesser größer als 200 mm und vorzugsweise größer als 250 mm ist, wobei die Verbindung dann so beschaffen ist, dass gilt:

$$25\ \% \leq Epi/Li.$$

3. Gewindeverbindung nach Anspruch 1 oder 2, **dadurch gekennzeichnet, dass** die Verbindung so beschaffen ist, dass gilt:

$$10\ \% \leq Epe/Le.$$

4. Gewindeverbindung nach einem der vorhergehenden Ansprüche, **dadurch gekennzeichnet, dass** die Verbindung so beschaffen ist, dass gilt:

$$15\ \% \leq Epe/Le,$$

und vorzugsweise

$$20 \ \% \ \leq \ Epe/Le.$$

**5.** Gewindeverbindung nach einem der vorhergehenden Ansprüche, **dadurch gekennzeichnet, dass** die Verbindung so beschaffen ist, dass gilt:

$$Epi/Li \ \leq \ 80 \ \%,$$

und vorzugsweise

$$Epi/Li \ \leq \ 60 \ \%,$$

und noch besser

$$Epi/Li \ \leq \ 50 \ \%.$$

**6.** Gewindeverbindung nach einem der vorhergehenden Ansprüche, **dadurch gekennzeichnet, dass** die Verbindung so beschaffen ist, dass gilt:

$$Epe/Le \ \leq \ 80 \ \%,$$

und vorzugsweise

$$Epe/Le \ \leq \ 60 \ \%,$$

und noch besser

$$Epe/Le \ \leq \ 50 \ \%.$$

**7.** Gewindeverbindung nach einem der vorhergehenden Ansprüche, **dadurch gekennzeichnet, dass** die Verbindung so beschaffen ist, dass gilt:

$$15 \ mm \ \leq \ Li \ \leq \ 25 \ mm.$$

**8.** Gewindeverbindung nach einem der vorhergehenden Ansprüche, **dadurch gekennzeichnet, dass** die Verbindung so beschaffen ist, dass gilt:

$$15 \ mm \ \leq \ Le \ \leq \ 25 \ mm.$$

**9.** Gewindeverbindung nach einem der vorhergehenden Ansprüche, **dadurch gekennzeichnet, dass** die Gewindebereiche (13, 23) Außen- bzw. Innengewindegänge mit zunehmender Breite aufweisen, wobei die Gewindegänge Trägerflanken, die negative Winkel aufweisen, und Eingriffsflanken, die einen positiven Winkel aufweisen, umfassen, wobei ein radiales Spiel im verbundenen Zustand zwischen Scheiteln der Außengewindegänge und Gründen der Innengewindegänge und/oder zwischen Scheiteln der Innengewindegänge und Gründen der Außengewindegänge verbleibt, wobei ein axiales Spiel im verbundenen Zustand zwischen den Eingriffsflanken der Außen- und Innengewindegänge verbleibt.

**10.** Gewindeverbindung nach einem der vorhergehenden Ansprüche, **dadurch gekennzeichnet, dass** die äußere Einsteck-Anschlagfläche (37) einen positiven Winkel $\alpha$ in Bezug auf eine Senkrechte zur Längsachse der Verbindung aufweist, und dadurch, dass die äußere Aufnahme-Anschlagfläche (42) denselben Winkel $\alpha$ aufweist, wobei der

Winkel $\alpha$ zwischen 5° und 45° liegt.

11. Gewindeverbindung nach einem der vorhergehenden Ansprüche, **dadurch gekennzeichnet, dass** im verbundenen Zustand die innere Anschlagfläche (17) des Einsteckendes nicht mit der inneren Anschlagfläche (28) des Aufnahmeendes in Kontakt kommt.

12. Gewindeverbindung nach einem der vorhergehenden Ansprüche, **dadurch gekennzeichnet, dass** im verbundenen Zustand die äußere Anschlagfläche (37) des Einsteckendes mit der äußeren Anschlagfläche (42) des Aufnahmeendes in Anschlagkontakt kommt.

13. Gewindeverbindung nach Anspruch 12, wobei die innere Aufnahme-Dichtfläche (26) zylindrisch oder konisch ist, wobei der Halbwinkel des Kegels zwischen 2° und 15° liegt.

14. Gewindeverbindung nach einem der vorhergehenden Ansprüche, **dadurch gekennzeichnet, dass** sie eine äußere Abdichtung aufweist, die durch Wechselwirkung zwischen einer äußeren Einsteck-Dichtfläche (36) und einer entsprechenden äußeren Aufnahme-Dichtfläche (44), die am Aufnahmeelement ausgebildet ist, erhalten wird.

15. Gewindeverbindung nach Anspruch 14, wobei die äußere Einsteck-Dichtfläche (36) torisch mit einem Radius zwischen 10 und 150 mm oder konisch mit einem Kegelhalbwinkel zwischen 2° und 15° ist.

16. Gewindeverbindung nach den Ansprüchen 14 oder 15, wobei die äußere Aufnahme-Dichtfläche (44) torisch oder konisch ist, wobei der Halbwinkel des Kegels zwischen 2° und 15° liegt, und wobei eine maximale Dicke an dieser äußeren Aufnahme-Dichtfläche (Esb) größer als die Dicke (Epe) des äußeren Ringes ist.

17. Gewindeverbindung nach einem der vorhergehenden Ansprüche, wobei der innere Anschlag (17) an seinem unteren Teil eine Abfasung (12) mit einem negativen Winkel $\beta$ bezüglich der Längsachse der Verbindung aufweist, um die Einführung oder das Herausziehen von Steuerungs- oder Bohrzubehör zu erleichtern.

18. Gewindeverbindung nach Anspruch 17, wobei der negative Winkel $\beta$ zwischen -20° und -30° liegt.

19. Gewindeverbindung nach einem der vorhergehenden Ansprüche, wobei der maximale Außendurchmesser des Aufnahmeelements zwischen 100,2 % und 101 % des Nenn-Außendurchmessers des zweiten Rohres beträgt.

20. Gewindeverbindung nach einem der vorhergehenden Ansprüche, wobei der minimale Innendurchmesser des Einsteckelements kleiner als ein Nenn-Innendurchmesser des ersten Rohres ist.


**Claims**

1. Threaded joint comprising first and second tubular components screwed to one another,
the first component (C1) including a first tube (10) and a male element disposed at one end of said first tube, the male element including successively on its exterior peripheral surface:

   - a male distal surface (17),
   - a male internal lip including an internal ring (11) of minimum thickness Epi,
   - a male threaded zone (13) such that an external end of this male threaded zone is at a non-zero axial distance (Li) from the male distal surface,
   - a male external housing (34), and
   - an exterior shoulder (37) adapted to form a male exterior abutment surface,
   the second component (C2) including a second tube (20) and a female element disposed at one end of said second tube, the female element including successively on its interior peripheral surface:

   - an interior shoulder (28),
   - a female internal housing (24) disposed facing the male internal lip,
   - a female threaded zone (23),
   - a female external lip including an external ring (21) of minimum thickness Epe, and
   - a female distal surface (42) adapted to cooperate in abutment reaction with the male exterior surface, this female distal surface being situated at a non-zero axial distance (Le) from an external end of the female threaded zone,

such that in the screwed together position of the joint a radial clearance exists between the male internal ring and the female internal housing, a radial clearance exists between the female external ring and the male external housing, an interior seal (Ei) being formed locally between the male internal lip and the female internal housing, the interior seal (Ei) includes a male interior sealing bearing surface (15) able to come into interfering contact with a corresponding female interior sealing bearing surface (26) on the female element, the male interior sealing bearing surface (15) being toroidal with a radius between 10 and 80 mm inclusive or conical with a cone half-angle between 2° and 15° inclusive, and **characterised in that** a maximum thickness (Esp) in line with this male interior sealing bearing surface is greater than the thickness (Epi) of the internal ring, the joint being such that:

$$10\% \leq Epi/Li$$

2. Threaded joint according to claim 1, **characterised in that** the first or second component has a tube nominal outside diameter at a distance from respective male and/or female elements such that this tube nominal diameter is greater than 200 mm and preferably greater than 250 mm, the joint then being such that:

$$25\% \leq Epi/Li$$

3. Threaded joint according to claim 1 or 2, **characterised in that** the joint is such that:

$$10\% \leq Epe/Le$$

4. Threaded joint according to any one of the preceding claims, **characterised in that** the joint is such that:

$$15\% \leq Epe/Le,$$

and preferably

$$20\% \leq Epe/Le$$

5. Threaded joint according to any one of the preceding claims, **characterised in that** the joint is such that:

$$Epi/Li \leq 80\%,$$

and preferably,

$$Epi/Li \leq 60\%,$$

and even better,

$$Epi/Li \leq 50\%$$

6. Threaded joint according to any one of the preceding claims, **characterised in that** the joint is such that:

$$Epe/Le \leq 80\%,$$

and preferably,

$$\text{Epe/Le} \leq 60\%,$$

and even better,

$$\text{Epe/Le} \leq 50\%$$

7. Threaded joint according to any one of the preceding claims, **characterised in that** the joint is such that:

$$15 \text{ mm} \leq \text{Li} \leq 25 \text{ mm}$$

8. Threaded joint according to any one of the preceding claims, **characterised in that** the joint is such that:

$$15 \text{ mm} \leq \text{Le} \leq 25 \text{ mm}$$

9. Threaded joint according to any one of the preceding claims, **characterised in that** the threaded zones (13, 23) respectively include male and female threads of increasing width, the threads having load-bearing flanks at negative angles and engagement flanks at a positive angle, a radial clearance existing in the connected state between the crests of the male threads and the roots of the female threads and/or between the crests of the female threads and the roots of the male threads, an axial clearance existing in the connected state between the engagement flanks of the male and female threads.

10. Threaded joint according to any one of the preceding claims, **characterised in that** the male exterior abutment surface (37) is at a positive angle $\alpha$ relative to a perpendicular to the longitudinal axis of the joint and **in that** the female exterior abutment surface (42) is at the same angle $\alpha$, the angle $\alpha$ being between 5° and 45° inclusive.

11. Threaded joint according to any one of the preceding claims, **characterised in that** in the connected state the interior abutment surface (17) of the male end does not come into contact with the interior abutment surface (28) of the female end.

12. Threaded joint according to any one of the preceding claims, **characterised in that** in the connected state the exterior abutment surface (37) of the male end comes into abutment contact with the exterior abutment surface (42) of the female end.

13. Threaded joint according to claim 12 in which the female interior sealing bearing surface (26) is cylindrical and/or conical, the cone half-angle being between 2° and 15° inclusive.

14. Threaded joint according to any one of the preceding claims, **characterised in that** it includes an exterior seal produced by interference between a male exterior sealing bearing surface (36) and a corresponding female exterior sealing bearing surface (44) on the female element.

15. Threaded joint according to claim 14 in which the male exterior sealing bearing surface (36) is toroidal with a radius between 10 and 150 mm inclusive or conical with a cone half-angle between 2° and 15° inclusive.

16. Threaded joint according to claim 14 or 15 in which female exterior sealing bearing surface (44) is toroidal or conical, the half-angle of the cone being between 2° and 15° inclusive, and such that a maximum thickness (Esb) in line with this female exterior sealing bearing surface is greater than the thickness (Epe) of the exterior ring.

17. Threaded joint according to any one of the preceding claims in which the interior abutment (17) has on its lower part a chamfer (12) at a negative angle $\beta$ relative to the longitudinal axis of the joint to facilitate insertion or withdrawal of inspection or drilling accessories.

18. Threaded joint according to claim 17 in which the negative angle $\beta$ is between - 20° and -30° inclusive.

19. Threaded joint according to any one of the preceding claims in which the maximum outside diameter of the female element is between 100.2% and 101% inclusive of the nominal outside diameter of the second tube.

20. Threaded joint according to any one of the preceding claims in which the minimum inside diameter of the male element is less than a nominal inside diameter of the first tube.

Fig. 1

EP 3 555 412 B1

Fig. 2

Fig. 3

21

**Fig. 4**

**Fig. 6**

**Fig. 5**

**Fig. 7**

**Fig. 8**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2952993
- FR 2953272 A1